# EUROPEAN PATENT APPLICATION

(11) **EP 4 131 083 A2**
(43) Date of publication of application: **08.02.2023**
(21) Application number: 22216303.2
(22) Date of filing: 23.12.2022
(51) Int. Cl.: G06N 3/098, G06N 3/0464, G06N 3/082, G06N 3/084

(54) **METHOD AND APPARATUS FOR GENERATING FEDERATED LEARNING MODEL**

(30) Priority: 23.12.2021 CN 202111592650
(71) Applicant: Beijing Baidu Netcom Science Technology Co., Ltd., Beijing 100085 (CN)
(72) Inventor: LIU, Ji, Beijing, 100085 (CN); YU, Sunjie, Beijing, 100085 (CN); DOU, Dejing, Beijing, 100085 (CN); ZHOU, Jiwen, Beijing, 100085 (CN)
(74) Representative: Maiwald GmbH

(57) **Abstract**

A method for generating a federated learning model and an apparatus for generating a federated learning model are provided. The method includes obtaining images; obtaining sorting results of the images; and generating a trained federated learning model by training a federated learning model to be trained according to the images and the sorting results. The federated learning model to be trained is obtained after pruning a federated learning model to be pruned, and a pruning rate of a convolution layer in the federated learning model to be pruned is automatically adjusted according to a model accuracy during the pruning.

## Description

### FIELD

The present invention relates to a technical field of deep learning and federated learning in artificial intelligence technology, and more particularly to a method for generating a federated learning model and an apparatus for generating a federated learning model.

### BACKGROUND

A series of technologies, such as model quantization and pruning, are proposed to solve problems of over parameterization of deep neural networks, accelerate model training, and adapt to resource constrained scenarios, which are used to reduce memory consumption of a model without sacrificing accuracy of the model, even improving the accuracy for some scenarios. The pruning is generally divided into structured pruning including channel pruning and layer pruning, as well as unstructured pruning, which is weight pruning.

Federated learning is a solution that may train deep neural networks without sacrificing data security and privacy, which is applied to learn models on edge devices such as mobile phones. However, due to the limited computing power and limited resources of the edge devices, the application of federated learning is hindered in model training and deployment, especially in the training of a large-scale deep neural network based on the federated learning.

Therefore, there is a need to accelerate the training of a federated learning model and generate a model that may adapt to edge use scenarios with limited resources through model pruning in federated learning scenarios.

### SUMMARY

The present invention provides a method for generating a federated learning model and an apparatus for generating a federated learning model.

According to a first aspect of embodiments of the present invention, a method for generating a federated learning model is provided. The method includes obtaining images; obtaining sorting results of the images; and generating a trained federated learning model by training a federated learning model to be trained according to the images and the sorting results. The federated learning model to be trained is obtained after pruning a federated learning model to be pruned, and a pruning rate of a convolution layer in the federated learning model to be pruned is automatically adjusted according to a model accuracy during the pruning.

According to a second aspect of embodiments of the present invention, an apparatus for generating federated learning model method is provided. The apparatus includes a first obtaining module configured to obtain images; a second obtaining module configured to obtain sorting results of the images; and a training module configured to generate a trained federated learning model by training a federated learning model to be trained according to the images and the sorting results. The federated learning model to be trained is obtained after pruning a federated learning model to be pruned, and a pruning rate of a convolution layer in the federated learning model to be pruned is automatically adjusted according to a model accuracy during the pruning.

According to a third aspect of embodiments of the present invention, an electronic device is provided. The electronic device includes at least one processor; and a memory communicatively connected to the at least one processor for storing instructions executable by the at least one processor. The at least one processor is configured to execute the instructions to perform the method for generating the federated learning model according to the first aspect of embodiments of the present invention.

According to a fourth aspect of embodiments of the present invention, a non-transitory computer-readable storage medium is provided. The non-transitory computer-readable storage medium has stored therein computer instructions that, when executed by a computer, cause the computer to perform the method for generating the federated learning model according to first aspect of embodiments of the present invention.

According to a fifth aspect of embodiments of the present invention, a computer program product is provided. The computer program product includes a computer program that, when executed by a processor, causes the processor to perform the method for generating the federated learning model according to first aspect of embodiments of the present invention.

It should be understood that the content described in this part is neither intended to identify key or significant features of the embodiments of the present invention, nor intended to limit the scope of the present invention as defined in the appended claims. Other features of the present invention will be easily understood through the following description.

### BRIEF DESCRIPTION OF THE DRAWINGS

The accompanying drawings are intended to provide a better understanding of the solutions and do not constitute a limitation on the present invention, in which:
FIG. 1 is a flow chart of a method for generating a federated learning model according to an embodiment of the present invention;
FIG. 2 is a flow chart of a method for generating a federated learning model according to another embodiment of the present invention;
FIG. 3 is a flow chart of a method for generating a federated learning model according to some embodiments of the present invention;
FIG. 4 is a block diagram showing an apparatus for generating a federated learning model according to an embodiment of the present invention;
FIG. 5 is a block diagram showing an apparatus for generating a federated learning model according to another embodiment of the present invention;
FIG. 6 is a block diagram of an electronic device configured to perform a method for generating a federated learning model in some embodiments of the present invention.

### DETAILED DESCRIPTION

Exemplary embodiments of the present invention are illustrated below with reference to the accompanying drawings, which include various details of the present invention to facilitate understanding and should be considered to be only exemplary. Therefore, those skilled in the art should be aware that various changes and modifications can be made to the embodiments described herein without departing from the scope of the present invention as defined in the appended claims. Similarly, for clarity and simplicity, descriptions of well-known functions and structures are omitted in the following description.

Artificial intelligence (AI for short) is a technology that researches and develops theories, methods, technologies and application systems used to simulate, extend and expand human intelligence, which has high automation, high accuracy, low cost, and a wide range of applications.

Deep learning (DL for short) is a new research direction in a field of machine learning (ML for short), which learns inherent laws and presentation levels of sample data to obtain information for facilitating the interpretation of data such as texts, images and sounds, such that a machine may have analysis and identification capability like people to recognize data such as texts, images and sounds. In exiting research, the DL technology includes a neural network system based on convolution operation (that is, a convolutional neural network), a self-encoding neural network based on multilayer neurons, and a deep confidence network that performs pre-training in a way of a multilayer self-encoding neural network to further optimize neural network weights by combining with identification information. The deep learning has been developed in various technologies, such as search technology, data mining, machine learning, machine translation, natural language processing, multimedia learning, sounding, recommendation and personalization technology, which makes the machine to imitate human activities such as audio-visual activities and thinking, and solves many complex pattern recognition problems, thus making great progress in the AI technologies.

Federated Learning is a machine learning framework that may effectively help multiple institutions to perform data use and machine learning modeling while meeting requirements of user privacy protection, data security and government regulations. According to distribution characteristics of island data, the federal learning may be divided into horizontal federal learning, vertical federal learning and federal transfer learning, and the federal learning may avoid unauthorized data diffusion and solve the problem of data islands.

A method for generating a federated learning model and an apparatus for generating a federated learning model in some embodiments of the present invention are described below with reference to the accompanying drawings.

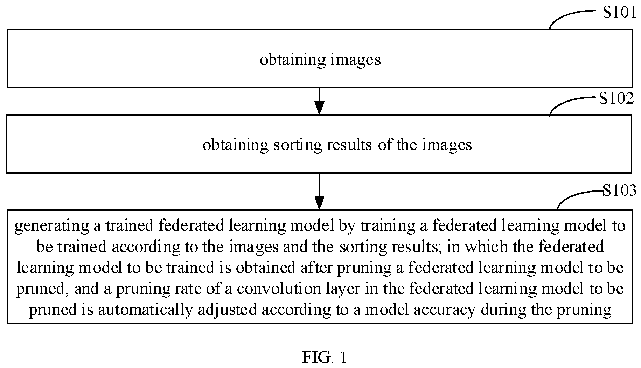

FIG. 1 is a flow chart of a method for generating a federated learning model according to an embodiment of the present invention.

As shown in FIG. 1, the method for generating the federated learning model includes the following steps S101 to S103.

In S 101, images are obtained.

An executing body of the method for generating the federated learning model is an apparatus for generating a federated learning model in some embodiments of the present invention. The apparatus for generating the federated learning model may be a hardware with data information processing capability and/or a necessary software to drive the hardware to work. In some embodiments, the executing body may include a workstation, a server, a computer, a user terminal and other devices. The user terminal includes, but is not limited to, a mobile phone, a computer, an intelligent voice interaction device, an intelligent household appliance, a vehicle terminal and the like.

The method in embodiments of the present invention may be applied to model training of large-scale deep neural networks in federal learning scenarios, so as to adapt to edge use scenarios with limited resources and accelerate model training.

In embodiments of the present invention, the images are obtained to construct training samples, for example, the images may be images obtained from a cloud or database, or video frames obtained from a video.

In step S 102, sorting results of the images are obtained.

In embodiments of the present invention, the sorting results are obtained according to the obtained images.

In step S103, a trained federated learning model is generated by training a federated learning model to be trained according to the images and the sorting results. The federated learning model to be trained is obtained after pruning a federated learning model to be pruned, and a pruning rate of a convolution layer in the federated learning model to be pruned is automatically adjusted according to a model accuracy during the pruning.

In embodiments of the present invention, the federated learning model to be trained is trained according to the obtained images and the obtained sorting results of the images to generate the trained federated learning model. The federated learning model to be pruned in embodiments of the present invention is pruned, and the pruned learning model is used as the federated learning model to be trained, so as to improve a training speed of the federated learning model to be trained, reduce memory resources occupied by the model, and generate a model adapting to the edge use scenarios with limited resources. In addition, during the pruning process, the pruning rate of the convolution layer in the model is automatically adjusted according to the accuracy of the federated learning model to be pruned without manually selecting parameters, so as to achieve adaptive pruning.

In general, the method for generating the federated learning model in embodiments of the present invention includes obtaining the images, obtaining the sorting results of the images, and generating the trained federated learning model by training the federated learning model to be trained according to the images and the sorting results. The federated learning model to be trained is obtained after pruning the federated learning model to be pruned, and the pruning rate of the convolution layer in the federated learning model to be pruned is automatically adjusted according to a model accuracy during the pruning. In this way, the model training speed may be improved, the resource occupation may be effectively reduced, and the model better adapting to the edge use scenarios with limited resources may be generated. The pruning rate of the convolution layer in the model is automatically adjusted according to the accuracy of the federated learning model to be pruned without manual selection of parameters, thereby realizing self-adaptive pruning.

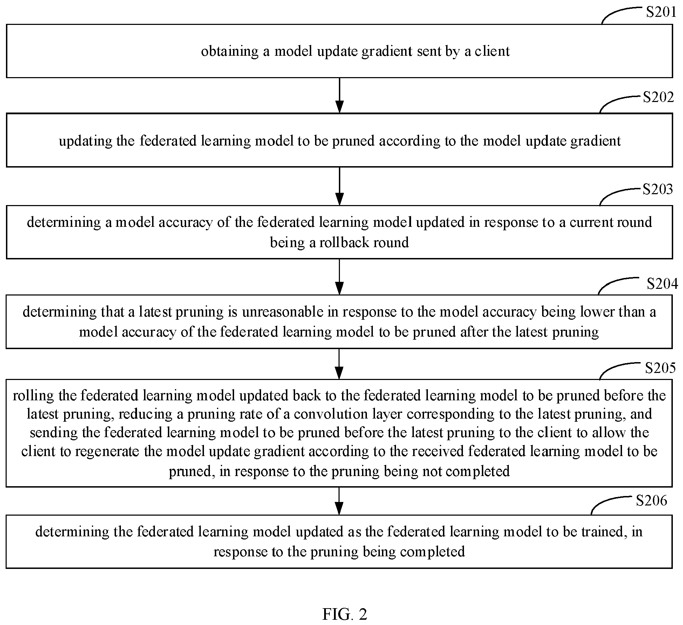

FIG. 2 is a flow chart of a method for generating a federated learning model according to another embodiment of the present invention.

As shown in FIG. 2, on a basis of the embodiment shown in FIG. 1, the method for generating the federated learning model in embodiments of the present invention further includes pruning the federated learning model to be pruned to obtain the federated learning model to be trained, which specifically includes the following steps S201 to S206.

In step S201, a model update gradient sent by a client is obtained.

In some embodiments, a plurality of clients implement joint modeling through the federated learning, for example, by adopting a horizontal federated learning framework based on a FedSGD algorithm, and building a federated learning model using a VGG11 model structure, so as to generate the model update gradients of the plurality of clients respectively. In embodiments of the present invention, the model update gradients sent by the plurality of clients are obtained.

In step S202, the federated learning model to be pruned is updated according to the model update gradient.

In embodiments of the present invention, the federated learning model to be pruned is updated according to the model update gradients obtained from the plurality of clients. For example, in the horizontal federated learning scenario based on the FedSGD algorithm, the FedSGD algorithm is applied to receive the model update gradient of the client and update a global model, that is, to update the federated learning model to be pruned.

In step S203, a model accuracy of the federated learning model updated is determined in response to a current round being a rollback round.

In embodiments of the present invention, the number of intervals between the rollback rounds and the number of intervals between the pruning rounds are predetermined. The convolution layer is structurally pruned in a pruning round, and the global model is rolled back based on a predetermined model rollback condition in a rollback round. For example, if the number of the intervals between the rollback rounds is 30 and the number of the intervals between the pruning rounds is 70, then the 70^{th} round is a pruning round and the 100^{th} (70+30) round is a rollback round.

In embodiments of the present invention, it is determined whether the current round is the rollback round. If the current round is the rollback round, the model accuracy of the federated learning model updated is determined. If the current round is not the rollback round, it is determined whether the current round is the pruning round.

In some embodiments, if the current round is the pruning round, the federated learning model updated is pruned according to the pruning rate of the convolution layer corresponding to the current round, and the federated learning model pruned is sent to the client.

In some embodiments, a model snapshot is provided before pruning for subsequent rollback to prune the model in a structured pruning manner.

In embodiments of the present invention, each pruning round corresponds to a different convolution layer. For example, the first pruning round corresponds to the 10^{th} convolution layer, and the second pruning round corresponds to the 11^{th} convolution layer. After reaching the last convolution layer, the next pruning round corresponds to the 10^{th} convolution layer again, and so forth.

When the convolution layer is pruned in the pruning round, a rank of an feature map of the federated learning model updated is determined, and a filter with a rank value lower than (maxRank-minRank)*x%+minRank is pruned, where maxRank is a maximum value in the rank of the feature map of the convolution layer corresponding to the current round, minRank is a minimum value in the rank of the feature map of the convolution layer corresponding to the current round, and x is a pruning rate of the convolution layer corresponding to the current round. After the pruning is completed, x is adjusted to the pruning rate of the next convolution layer to prune the next convolution layer in the next pruning round.

If the current round is not the pruning round, the pruning is not required. The federated learning model updated is sent to the client, and the client generates a model update gradient based on the received federated learning model to be pruned, so as to perform cyclic pruning until the pruning is completed.

In step S204, it is determined that a latest pruning is unreasonable in response to the model accuracy being lower than a model accuracy of the federated learning model to be pruned after the latest pruning.

In the embodiment of the present invention, in response to the current round being the rollback round, it is determined whether the model accuracy of the federated learning model updated is lower than the model accuracy of the federated learning model to be pruned after the latest pruning. If the model accuracy of the federated learning model updated is lower than the model accuracy of the federated learning model to be pruned after the latest pruning, it is determined that the latest pruning is unreasonable.

If the model accuracy is equal to or higher than the model accuracy of the federated learning model to be pruned after the latest pruning, it is determined that the latest pruning is reasonable, and the federated learning model updated is sent to the client to allow the client to generate a new model update gradient according to a model structure and weight data of the received federated learning model to be pruned.

In step S205, the federated learning model updated is rolled back to the federated learning model to be pruned before the latest pruning, a pruning rate of a convolution layer corresponding to the latest pruning is reduced, and the federated learning model to be pruned before the latest pruning is sent to the client to allow the client to regenerate the model update gradient according to the received federated learning model to be pruned, in response to the pruning being not completed.

In the embodiment of the present invention, it is possible to determine whether the pruning is completed after determining that the latest pruning is unreasonable. If there is reasonable pruning in the pruning process of all convolution layers of the federated learning model updated, it is determined that the pruning is not completed, and the model may also be compressed by successive pruning. Otherwise, it is determined that the pruning is completed.

In response to the pruning being not completed, the federated learning model updated is rolled back to the federated learning model to be pruned before the latest pruning, and the pruning rate of the convolution layer corresponding to the latest pruning is reduced. For example, the pruning rate of the convolution layer corresponding to the latest pruning is reduced to half of the current pruning rate to dynamically update the pruning rate of each layer.

In some embodiments, when the reduced pruning rate of the convolution layer corresponding to the latest pruning is lower than a preset threshold of the pruning rate, the threshold of the pruning rate is determined as the reduced pruning rate of the convolution layer corresponding to the latest pruning. For example, when the pruning rate of the convolution layer corresponding to the latest pruning after reduction is lower than the preset threshold of the pruning rate, e.g. 10%, the pruning rate of the convolution layer corresponding to the latest pruning is determined to 10%.

In step S206, the federated learning model updated is determined as the federated learning model to be trained, in response to the pruning being completed.

In embodiments of the present invention, if the pruning of all convolution layers is unreasonable, it is determined that the pruning is completed, and there is no need to enter the rollback round, that is, the pruning is ended. The federated learning model updated is determined as the federated learning model to be trained.

In general, the method for generating the federated learning model in embodiments of the present invention includes obtaining the images, obtaining the sorting results of the images, and generating the trained federated learning model by training the federated learning model to be trained according to the images and the sorting results. The federated learning model to be trained is obtained after pruning the federated learning model to be pruned, and the pruning rate of the convolution layer in the federated learning model to be pruned is automatically adjusted according to a model accuracy during the pruning. In embodiments of the present invention, the pruning rate of each convolution layer is dynamically updated in the rollback round without manually selecting parameters, which achieves adaptive model pruning in the federated learning scene, and accelerates the training of the federated learning model, thereby generating a model that may better adapt to the edge use scene with limited resources.

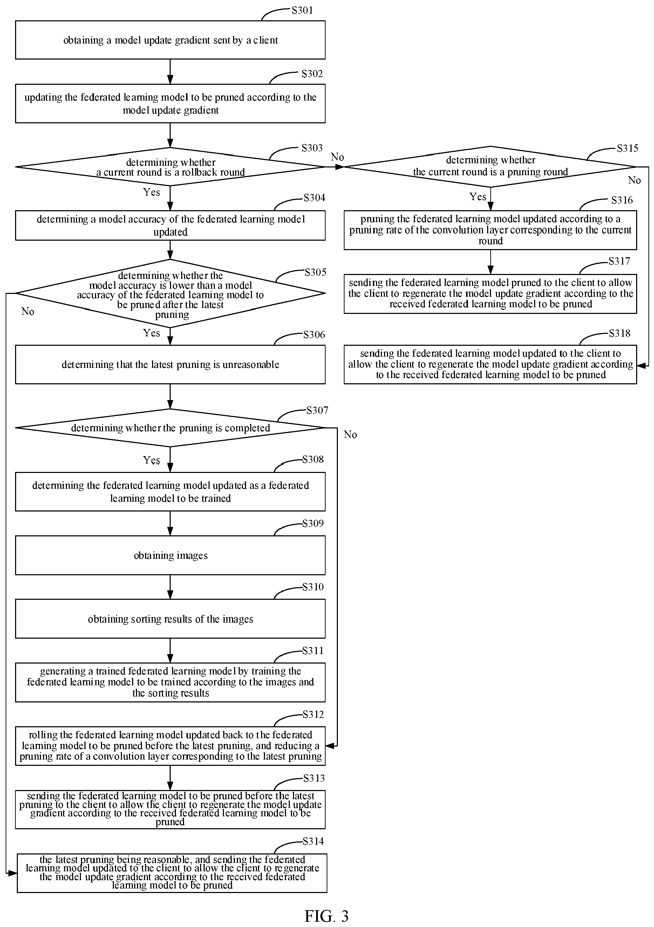

In order to clearly explain the method for generating the federated learning model in embodiments of the present invention, the following description will be provided in detail with reference to FIG. 3. FIG. 3 is a flow chart of a method for generating a federated learning model according to some embodiments of the present invention. As shown in FIG. 3, the method for generating the federated learning model in embodiments of the invention includes the following steps S301 to S318.

In step S301, a model update gradient sent by a client is obtained.

In step S302, the federated learning model to be pruned is updated according to the model update gradient.

In step S303, it is determined whether the current round is a rollback round.

If the current round is the rollback round, step S304 is performed. If the current round is not the rollback round, step S315 is performed.

In step S304, a model accuracy of the federated learning model updated is determined.

In step S305, it is determined whether the model accuracy is lower than a model accuracy of the federated learning model to be pruned after the latest pruning.

If the model accuracy is lower than the model accuracy of the federated learning model to be pruned after the latest pruning, step S306 is performed. If the model accuracy is not lower than the model accuracy of the federated learning model to be pruned after the latest pruning, step S314 is performed.

In step S306, it is determined that the latest pruning is unreasonable.

In step S307, it is determined whether the pruning is completed.

If the pruning is completed, step S308 is performed. If the pruning is not completed, step S312 is performed.

In step S308, the federated learning model updated is determined as a federated learning model to be trained.

In step S309, images are obtained.

In step S310, sorting results of the images are obtained.

In step S311, a trained federated learning model is generated by training the federated learning model to be trained according to the images and the sorting results.

In step S312, the federated learning model updated is rolled back to the federated learning model to be pruned before the latest pruning, and a pruning rate of a convolution layer corresponding to the latest pruning is reduced.

In step S313, the federated learning model to be pruned before the latest pruning is sent to the client to allow the client to regenerate the model update gradient according to the received federated learning model to be pruned.

In step S314, the latest pruning is reasonable, and the federated learning model updated is sent to the client to allow the client to regenerate the model update gradient according to the received federated learning model to be pruned.

In step S315, it is determined whether the current round is a pruning round.

If the current round is the pruning round, step S316 is performed. If the current round is not the pruning round, step S318 is performed.

In step S316, the federated learning model updated is pruned according to the pruning rate of the convolution layer corresponding to the current round.

In step S317, the federated learning model pruned is sent to the client to allow the client to regenerate the model update gradient according to the received federated learning model to be pruned.

In step S318, the federated learning model updated is sent to the client to allow the client to regenerate the model update gradient according to the received federated learning model to be pruned.

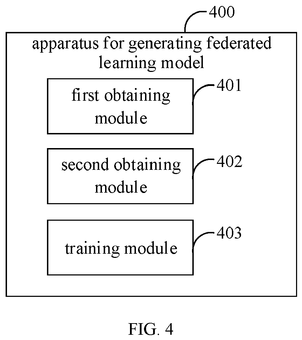

FIG. 4 is a block diagram showing an apparatus for generating a federated learning model according to an embodiment of the present invention.

As shown in FIG. 4, the apparatus 400 for generating the federated learning model includes a first obtaining module 401, a second obtaining module 402 and a training module 403.

The first obtaining module 401 is configured to obtain images.

The second obtaining module 402 is configured to obtain sorting results of the images.

The training module 403 is configured to generate a trained federated learning model by training a federated learning model to be trained according to the images and the sorting results. The federated learning model to be trained is obtained after pruning a federated learning model to be pruned, and a pruning rate of a convolution layer in the federated learning model to be pruned is automatically adjusted according to a model accuracy during the pruning.

It should be noted that the above-mentioned descriptions of the method for generating the federal learning model are also applicable to the apparatus for generating the federal learning model in embodiments of the present invention, which will not be repeated here.

In general, in the apparatus for generating the federated learning model in embodiments of the present invention, the images and the sorting results of the images are obtained, and the trained federated learning model is generated by training the federated learning model to be trained according to the images and the sorting results. The federated learning model to be trained is obtained after pruning the federated learning model to be pruned, and the pruning rate of the convolution layer in the federated learning model to be pruned is automatically adjusted according to a model accuracy during the pruning. In this way, the model training speed may be improved, the resource occupation may be effectively reduced, and the model better adapting to the edge use scenarios with limited resources may be generated. The pruning rate of the convolution layer in the model is automatically adjusted according to the accuracy of the federated learning model to be pruned without manual selection of parameters, thereby realizing self-adaptive pruning.

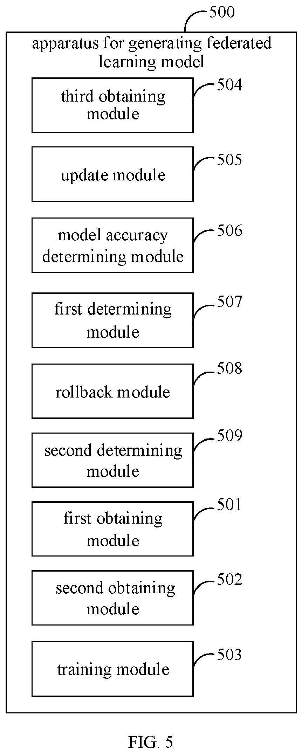

FIG. 5 is a block diagram showing an apparatus for generating a federated learning model according to another embodiment of the present invention.

As shown in FIG. 5, the apparatus 500 for generating the federated learning model in embodiments of the present invention includes a first obtaining module 501, a second obtaining module 502 and a training module 503.

The first obtaining module 501 has the same structure and function as the first obtaining module 401 in the above-mentioned embodiment, the second obtaining module 502 has the same structure and function as the second obtaining module 402 in the above-mentioned embodiment, and the training module 503 has the same structure and function as the training module 403 in the above-mentioned embodiment.

The apparatus 500 for generating the federated learning model further includes a third obtaining module 504, an update module 505, a model accuracy determining module 506, a first determining module 507, a rollback module 508 and a second determining module 509. The third obtaining module 504 is configured to obtain a model update gradient sent by a client. The update module 505 is configured to update the federated learning model to be pruned according to the model update gradient. The model accuracy determining module 506 is configured to determine a model accuracy of the federated learning model updated in response to a current round being a rollback round. The first determining module 507 is configured to determine that a latest pruning is unreasonable in response to the model accuracy being lower than a model accuracy of the federated learning model to be pruned after the latest pruning. The rollback module 508 is configured to roll the federated learning model updated back to the federated learning model to be pruned before the latest pruning, reduce a pruning rate of a convolution layer corresponding to the latest pruning, and send the federated learning model to be pruned before the latest pruning to the client to allow the client to regenerate the model update gradient according to the received federated learning model to be pruned, in response to the pruning being not completed. The second determining module 509 is configured to determine the federated learning model updated as the federated learning model to be trained, in response to the pruning being completed.

In some embodiments, the rollback module 508 includes a reducing unit configured to reduce the pruning rate of the convolution layer corresponding to the latest pruning by half.

In some embodiments, the apparatus 500 for generating the federated learning model further includes a third determining module configured to determine the pruning rate of the convolution layer reduced as a threshold of the pruning rate, in response to the pruning rate of the convolution layer reduced being lower than a preset threshold of the pruning rate.

In some embodiments, the apparatus 500 for generating the federated learning model further includes a fourth determining module configured to determine that the latest pruning is reasonable, and send the federated learning model updated to the client to allow the client to regenerate the model update gradient according to the received federated learning model to be pruned, in response to the model accuracy being equal to or higher than the model accuracy of the federated learning model to be pruned after the latest pruning.

In some embodiments, the apparatus 500 for generating the federated learning model further includes a sending module configured to send the federated learning model updated to the client to allow the client to regenerate the model update gradient according to the received federated learning model to be pruned, in response to the current round being not the rollback round and the current round being not a pruning round.

In some embodiments, the apparatus 500 for generating the federated learning model further includes a pruning module configured to prune the federated learning model updated according to a pruning rate of the convolution layer corresponding to the current round, and send the federated learning model pruned to the client to allow the client to regenerate the model update gradient according to the received federated learning model to be pruned, in response to the current round being not the rollback round and the current round being a pruning round.

In general, in the apparatus for generating the federated learning model in embodiments of the present invention, the images and the sorting results of the images are obtained, and the trained federated learning model is generated by training the federated learning model to be trained according to the images and the sorting results. The federated learning model to be trained is obtained after pruning the federated learning model to be pruned, and the pruning rate of the convolution layer in the federated learning model to be pruned is automatically adjusted according to a model accuracy during the pruning. In embodiments of the present invention, the pruning rate of each convolution layer is dynamically updated in the rollback round without manually selecting parameters, which achieves adaptive model pruning in the federated learning scene, and accelerates the training of the federated learning model, thereby generating a model that may better adapt to the edge use scene with limited resources.

The collection, storage, use, processing, transmission, provision and invention of the user's personal information involved in the technical solution of the present invention comply with the provisions of relevant laws and regulations, and do not violate public orders and customs.

According to embodiments of the present invention, the present invention further provides an electronic device. The electronic device includes at least one processor; and a memory communicatively connected to the at least one processor for storing instructions executable by the at least one processor. The at least one processor is configured to execute the instructions to perform the method for generating the federated learning model according to the above-mentioned embodiments.

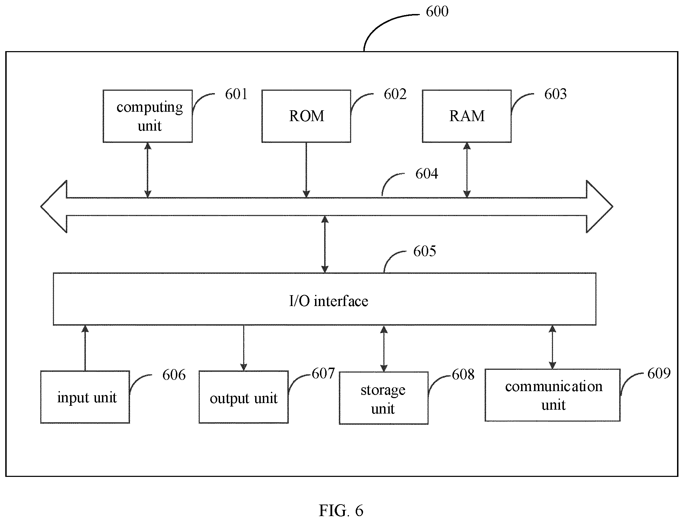

FIG. 6 is a block diagram of an electronic device 600 configured to perform the method in some embodiments of the present invention. The electronic device is intended to represent various forms of digital computers, such as laptops, desktops, workbenches, personal digital assistants, servers, blade servers, mainframe computers and other suitable computing devices. The electronic device may further represent various forms of mobile devices, such as personal digital assistants, cellular phones, smart phones, wearable devices and other similar computing devices. The components, their connections and relationships, and their functions shown herein are examples only, and are not intended to limit the implementation of the present invention as described and/or required herein.

As shown in FIG. 6, the electronic device 600 may include a computing unit 601, which may perform various suitable actions and processing according to a computer program stored in a read-only memory (ROM) 602 or a computer program loaded from a storage unit 608 into a random access memory (RAM) 603. The RAM 603 may also store various programs and data required to operate the electronic device 600. The computing unit 601, the ROM 602 and the RAM 603 are connected to one another via a bus 604. An input/output (I/O) interface 605 is also connected to the bus 604.

A plurality of components in the electronic device 600 are connected to the I/O interface 605, including an input unit 606, such as a keyboard and a mouse; an output unit 607, such as various displays and speakers; a storage unit 608, such as magnetic disks and optical discs; and a communication unit 609, such as a network card, a modem and a wireless communication transceiver. The communication unit 609 allows the electronic device 600 to exchange information/data with other devices over computer networks such as the Internet and/or various telecommunications networks.

The computing unit 601 may be a variety of general-purpose and/or special-purpose processing components with processing and computing capabilities. Some examples of the computing unit 601 include, but are not limited to, a central processing unit (CPU), a graphics processing unit (GPU), various dedicated artificial intelligence (AI) computing chips, various computing units that run machine learning model algorithms, a digital signal processor (DSP), any appropriate processor, controller or microcontroller, etc. The computing unit 601 is configured to perform the methods and processing described above, such as the method for generating the federated learning model shown in FIGS. 1-3. For example, in some embodiments, the method for generating the federated learning model may be implemented as a computer software program that is tangibly embodied in a machine-readable medium, such as the storage unit 608.

In some embodiments, part or all of a computer program may be loaded and/or installed on the electronic device 600 via the ROM 602 and/or the communication unit 609. One or more steps of the method for generating the federated learning model described above may be performed when the computer program is loaded into the RAM 603 and executed by the computing unit 601. Alternatively, in other embodiments, the computing unit 601 may be configured to perform the method for generating the federated learning model by any other appropriate means (for example, by means of firmware).

Various implementations of the systems and technologies disclosed herein can be realized in a digital electronic circuit system, an integrated circuit system, a field programmable gate array (FPGA), an application-specific integrated circuit (ASIC), an application-specific standard product (ASSP), a system on chip (SOC), a complex programmable logic device (CPLD), computer hardware, firmware, software, and/or combinations thereof. Such implementations may include implementation in one or more computer programs that are executable and/or interpretable on a programmable system including at least one programmable processor. The programmable processor can be special or general purpose, and configured to receive data and instructions from a storage system, at least one input apparatus, and at least one output apparatus, and to transmit data and instructions to the storage system, the at least one input apparatus, and the at least one output apparatus.

Program codes configured to implement the methods in the present invention may be written in one or any combination of multiple programming languages. Such program codes may be supplied to a processor or controller of a general-purpose computer, a special-purpose computer, or another programmable data processing apparatus to enable the function/operation specified in the flowchart and/or block diagram to be implemented when the program codes are executed by the processor or controller. The program codes may be executed entirely on a machine, partially on a machine, partially on a machine and partially on a remote machine as a stand-alone software package, or entirely on a remote machine or a server.

In the context of the present invention, machine-readable media may be tangible media which may include or store programs for use by or in conjunction with an instruction execution system, apparatus or device. The machine-readable media may be machine-readable signal media or machine-readable storage media. The machine-readable media may include, but are not limited to, electronic, magnetic, optical, electromagnetic, infrared, or semiconductor systems, apparatuses or devices, or any suitable combination thereof. More specific examples of machine-readable storage media may include electrical connections based on one or more wires, a portable computer disk, a hard disk, a random access memory (RAM), a read-only memory (ROM), an erasable programmable read only memory (EPROM or flash memory), an optical fiber, a compact disk read only memory (CD-ROM), an optical storage device, a magnetic storage device, or any suitable combination thereof.

To provide interaction with a user, the systems and technologies described here can be implemented on a computer. The computer has: a display apparatus (e.g., a cathode-ray tube (CRT) or a liquid crystal display (LCD) monitor) for displaying information to the user; and a keyboard and a pointing apparatus (e.g., a mouse or trackball) through which the user may provide input for the computer. Other kinds of apparatuses may also be configured to provide interaction with the user. For example, a feedback provided for the user may be any form of sensory feedback (e.g., visual, auditory, or tactile feedback); and input from the user may be received in any form (including sound input, speech input, or tactile input).

The systems and technologies described herein can be implemented in a computing system including background components (e.g., as a data server), or a computing system including middleware components (e.g., an application server), or a computing system including front-end components (e.g., a user computer with a graphical user interface or web browser through which the user can interact with the implementations of the systems and technologies described here), or a computing system including any combination of such background components, middleware components or front-end components. The components of the system can be connected to each other through any form or medium of digital data communication (e.g., a communication network). Examples of the communication network include: a local area network (LAN), a wide area network (WAN), the Internet and a block chain network.

The computer device may include a client and a server. The client and the server are generally far away from each other and generally interact with each other via the communication network. A relationship between the client and the server is generated through computer programs that run on a corresponding computer and have a client-server relationship with each other. The server may be a cloud server, also known as a cloud computing server or cloud host, which is a host product in the cloud computing service system to solve the problems of difficult management and weak business scalability in the traditional physical host and a virtual private server (VPS). The server may also be a distributed system server, or a server combined with a block chain.

According to embodiments of the present invention, the present invention further provides a non-transitory computer-readable storage medium having stored therein computer instructions that, when executed by a computer, cause the computer to perform the method for generating the federated learning model according to the above-mentioned embodiments.

According to embodiments of the present invention, the present invention further provides a computer program product. The computer program product includes a computer program that, when executed by a processor, causes the processor to perform the method for generating the federated learning model according to the above-mentioned embodiments.

It should be understood that the steps can be reordered, added, or deleted using the various forms of processes shown above. For example, the steps described in the present application may be executed in parallel or sequentially or in different sequences, provided that desired results of the technical solutions disclosed in the present invention are achieved, which is not limited herein.

The above-mentioned embodiments are not intended to limit the extent of protection of the present invention. Those skilled in the art should understand that various modifications, combinations, sub-combinations, and replacements can be made according to design requirements and other factors. Any modifications, equivalent substitutions and improvements made within the present invention should be included in the extent of protection of the present invention.

## Claims

1. A method for generating a federated learning model, comprising:
obtaining (S101) images;
obtaining (S102) sorting results of the images; and
generating (S103) a trained federated learning model by training a federated learning model to be trained according to the images and the sorting results;
wherein the federated learning model to be trained is obtained after pruning a federated learning model to be pruned, and a pruning rate of a convolution layer in the federated learning model to be pruned is automatically adjusted according to a model accuracy during the pruning.

2. The method according to claim 1, further comprising:
obtaining (S201) a model update gradient sent by a client;
updating (S202) the federated learning model to be pruned according to the model update gradient;
determining (S203) a model accuracy of the federated learning model updated in response to a current round being a rollback round;
determining (S204) that a latest pruning is unreasonable in response to the model accuracy being lower than a model accuracy of the federated learning model to be pruned after the latest pruning;
rolling (S205) the federated learning model updated back to the federated learning model to be pruned before the latest pruning, reducing a pruning rate of a convolution layer corresponding to the latest pruning, and sending the federated learning model to be pruned before the latest pruning to the client to allow the client to regenerate the model update gradient according to the received federated learning model to be pruned, in response to the pruning being not completed; and
determining (S206) the federated learning model updated as the federated learning model to be trained, in response to the pruning being completed.

3. The method according to claim 2, wherein reducing the pruning rate of the convolution layer corresponding to the latest pruning comprises:
reducing the pruning rate of the convolution layer corresponding to the latest pruning by half.

4. The method according to claim 2 or 3, further comprising:
determining the pruning rate of the convolution layer reduced as a threshold of the pruning rate, in response to the pruning rate of the convolution layer reduced being lower than a preset threshold of the pruning rate.

5. The method according to any one of claims 2 to 4, further comprising:
determining that the latest pruning is reasonable, and sending the federated learning model updated to the client to allow the client to regenerate the model update gradient according to the received federated learning model to be pruned, in response to the model accuracy being equal to or higher than the model accuracy of the federated learning model to be pruned after the latest pruning.

6. The method according to any one of claims 2 to 5, further comprising:
sending the federated learning model updated to the client to allow the client to regenerate the model update gradient according to the received federated learning model to be pruned, in response to the current round being not the rollback round and the current round being not a pruning round.

7. The method according to any one of claims 2 to 6, further comprising:
pruning the federated learning model updated according to a pruning rate of the convolution layer corresponding to the current round, and sending the federated learning model pruned to the client to allow the client to regenerate the model update gradient according to the received federated learning model to be pruned, in response to the current round being not the rollback round and the current round being a pruning round.

8. An apparatus for generating a federated learning model, comprising:
a first obtaining module (401, 501) configured to obtain images;
a second obtaining module (402, 502) configured to obtain sorting results of the images; and
a training module configured (403, 503) to generate a trained federated learning model by training a federated learning model to be trained according to the images and the sorting results;
wherein the federated learning model to be trained is obtained after pruning a federated learning model to be pruned, and a pruning rate of a convolution layer in the federated learning model to be pruned is automatically adjusted according to a model accuracy during the pruning.

9. The apparatus according to claim 8, further comprising:
a third obtaining module (504) configured to obtain a model update gradient sent by a client;
an update module (505) configured to update the federated learning model to be pruned according to the model update gradient;
a model accuracy determining module (506) configured to determine a model accuracy of the federated learning model updated in response to a current round being a rollback round;
a first determining module (507) configured to determine that a latest pruning is unreasonable in response to the model accuracy being lower than a model accuracy of the federated learning model to be pruned after the latest pruning;
a rollback module (508) configured to roll the federated learning model updated back to the federated learning model to be pruned before the latest pruning, reduce a pruning rate of a convolution layer corresponding to the latest pruning, and send the federated learning model to be pruned before the latest pruning to the client to allow the client to regenerate the model update gradient according to the received federated learning model to be pruned, in response to the pruning being not completed;
a second determining module (509) configured to determine the federated learning model updated as the federated learning model to be trained, in response to the pruning being completed.

10. The apparatus according to claim 9, wherein the rollback module comprises:
a reducing unit configured to reduce the pruning rate of the convolution layer corresponding to the latest pruning by half.

11. The apparatus according to claim 9 or 10, further comprising:
a third determining module configured to determine the pruning rate of the convolution layer reduced as a threshold of the pruning rate, in response to the pruning rate of the convolution layer reduced being lower than a preset threshold of the pruning rate.

12. The apparatus according to any one of claims 9 to 11, further comprising:
a fourth determining module configured to determine that the latest pruning is reasonable, and send the federated learning model updated to the client to allow the client to regenerate the model update gradient according to the received federated learning model to be pruned, in response to the model accuracy being equal to or higher than the model accuracy of the federated learning model to be pruned after the latest pruning.

13. The apparatus according to any one of claims 9 to 12, further comprising:
a sending module configured to send the federated learning model updated to the client to allow the client to regenerate the model update gradient according to the received federated learning model to be pruned, in response to the current round being not the rollback round and the current round being not a pruning round.

14. The apparatus according to any one of claims 9 to 13, further comprising:
a pruning module configured to prune the federated learning model updated according to a pruning rate of the convolution layer corresponding to the current round, and send the federated learning model pruned to the client to allow the client to regenerate the model update gradient according to the received federated learning model to be pruned, in response to the current round being not the rollback round and the current round being a pruning round.

15. An electronic device, comprising:
at least one processor; and
a memory communicatively connected to the at least one processor for storing instructions executable by the at least one processor;
wherein the at least one processor is configured to execute the instructions to perform the method according to any one of claims 1 to 7.
